# EUROPÄISCHE PATENTSCHRIFT

(11) **EP 2 920 488 B1**
(45) Veröffentlichungstag und Bekanntmachung des Hinweises auf die Patenterteilung: **14.06.2023**
(21) Anmeldenummer: 13798276.5
(22) Anmeldetag: 13.11.2013
(51) Int. Cl.: F16H 25/20, H02K 5/06, F16H 57/03

(54) **LINEARER STELLANTRIEB**
LINEAR ACTUATING DRIVE
DISPOSITIF D'ENTRAÎNEMENT LINÉAIRE

(30) Priorität: 13.11.2012 DE 202012104376 U
(43) Veröffentlichungstag der Anmeldung: 23.09.2015
(73) Patentinhaber: DewertOkin KFT, 6000 Kecskemét (HU)
(72) Erfinder: KLIMM, Hartmut, 32257 Bünde (DE); MARTIN, Jürgen, 32257 Bünde (DE); MÜLLER, Christian, 32839 Steinheim (DE); NOWAK, Patrick, 32130 Enger (DE); OBERNDÖRFER, Andreas, 33739 Bielefeld (DE); FLAMME, Klaus-Peter, 86807 Buchloe (DE)
(74) Vertreter: Lippert Stachow Patentanwälte Rechtsanwälte
(86) Internationale Anmeldenummer: PCT/EP2013/073760
(87) Internationale Veröffentlichungsnummer: WO 2014/076148

(56) Entgegenhaltungen:
- EP-A1- 2 080 452
- DE-U1-202006 018 505
- DE-U1-202007 015 811
- US-A1- 2011 056 328

## Beschreibung

Die Erfindung betrifft einen linearen Stellantrieb gemäß dem Oberbegriff des Anspruches 1 bzw. 2.

Die während der Betätigung des Stellantriebes auf die Spindel einwirkenden und von dieser übertragenen Kräfte werden vom Gehäuse aufgenommen, welches im Wesentlichen auf Biegung beansprucht wird. Dies kann, wenn keine besonderen Maßnahmen getroffen werden, dazu führen, dass das Gehäuse über ein zulässiges Maß hinaus verformt wird. Um dies zu vermeiden, ist es bekannt, das Gehäuse massiv und somit entsprechend schwer auszuführen und/oder eine zusätzliche Tragkonstruktion für die Komponenten des Stellantriebes vorzusehen, an denen die Kräfte wirksam werden.

Aus DE 20 06 018505 U1 ist ein linearer Stellantrieb mit einem zwei Teile aufweisenden Gehäuse bekannt, in welchem ein Schneckengetriebe mit einer Schneckenwelle und einem Schneckenrad untergebracht ist. Dieses Gehäuse erstreckt sich unterhalb einer Spindel, auf welcher eine Spindelmutter aufgesetzt ist. Es wird von zwei Teilen gebildet, deren schalenförmige Gestaltung eine relativ hohe Eigenfestigkeit bewirkt. US 2011/056328 A1 offenbart einen mit einem Drehzahlreduziergetriebe und mit einem senkrecht zu seiner Längsrichtung unterteilten Gehäuse und einer ersten flächigen Verstärkungsplatte versehenen Spindeltrieb. Letzterer ist die senkrecht zur Längsrichtung der Spindel am vorderen Gehäuseteil angebracht und außenseitig mit einem Stützrohr verbunden, welches den gegenüber dem Gehäuse vorstehenden Spindelabschnitt umgibt. Dabei kann eine zweite Verstärkungsplatte vorgesehen sein, welche an der anderen Stirnseite des Gehäuses parallel zur ersten Verstärkungsplatte angebracht ist. Beide das Gehäuse zwischen sich aufnehmenden Verstärkungsplatten werden über Schraubbolzen miteinander verbunden. Ferner sind zwei Spindeltriebe offenbart, bei denen die beiden senkrecht zur Längsrichtung des Gehäuses verlaufenden Verstärkungsplatten durch mit wenigstens einer, seitlich angebrachten Zwischenplatte derart versehen sind, dass sich ein wenigstens drei Seiten des Gehäuses umhüllender und diese einspannender einstückiger Hohlkörper ergibt.

Aus DE 20 2007 015 811 U1 ist ein als Doppelantrieb ausgebildeter Möbelantrieb bekannt, welcher ein langgestrecktes Gehäuse mit einem eine Spindel und eine Spindelmutter aufweisenden Drehzahlreduziergetriebe aufweist. Dabei ist das Gehäuse mit jeweils einem Sitz für eine quer zur Spindel verlaufenden Welle versehen, welche über ein Hebelgetriebe mit der Spindelmutter verbunden ist.

Die EP 2 080 452 A1 betrifft einen linearen Stellantrieb mit einem zweiteiligen Gehäuse, in welchem ein Schneckengetriebe mit einer Schneckenwelle und einem Schneckenrad, die Teil eines Getriebezuges sind, untergebracht ist, und einem die Schneckenwelle antreibenden Motor und einer mit dem Schneckenrad verbundenen, gegen Rotation gesicherten Spindel, wobei ein Innengewinde des Schneckenrades mit dem Gewinde der Spindel in Eingriff ist, und einem Lager für das Schneckenrad, wobei eine quer zur Spindel verlaufende Verstellwelle vorhanden ist, die in einem nahe dem Ende des Gehäuses vorgesehenen Sitz gelagert ist und Teil des Getriebezuges darstellt, der ein Hebelgetriebe umfasst, dessen Hebel mit der Antriebswelle verbunden ist.

Der Erfindung liegt die Aufgabe zugrunde, die Nachteile des Standes der Technik zu vermeiden. Insbesondere wird angestrebt, das Gehäuse so auszubilden, dass es mit wenig zusätzlichem Aufwand höher belastbar und dabei leicht montierbar ist.

Zur Lösung der Aufgabe dient die Lehre des Anspruches 1 bzw. 2. Die Unteransprüche beinhalten weitere Ausgestaltungen.

Die durch den Gewindetrieb, insbesondere durch das Spindellager bzw. Lager für das Schneckenrad auf das Gehäuse einwirkenden Verstellkräfte werden auf die Verstärkungen übertragen, die das Gehäuse stützen, so dass Letzteres im Wesentlichen lediglich die Funktion zu erfüllen hat, die zur Aufnahme und Umhüllung der wesentlichen Komponenten des Stellantriebes erforderlich sind und somit nur entsprechend den sich daraus ergebenden Belastungen ausgebildet und dimensioniert zu werden brauchen.

Die flächige Ausgestaltung der Verstärkung hat den Vorteil dass sie als dünne Auflage ausgebildet sein kann, die keinen oder wenig zusätzlichen Platz erfordert und zudem leicht an die jeweils zweckmäßige Form und Ausgestaltung des Gehäuses angepasst werden kann. Der für die Anbringung der Verstärkung erforderliche Aufwand ist nicht sehr groß, zumal der zwischen Gehäuse und Verstärkung gegebenenfalls erforderliche Formschluss durch entsprechende Formgebung des üblicherweise aus Kunststoff bestehenden Gehäuses und der Verstärkung herbeigeführt werden kann. Die als flächige Auflage oder Abdeckungung ausgebildete Verstärkung verläuft in Längsrichtung des Gehäuses. Der wenigstens eine Antriebsmotor kann seitlich am Gehäuse angebracht sein, wobei die Auflage mit einer Ausnehmung für den Motor bzw. dessen Gehäuse versehen sein kann.

Die Verwendung von flächigen Auflagen als Verstärkungen in Form beispielsweise eines Bleches oder eines entsprechend dünnen plattenförmigen Materials aus hochfesten Kunststoff hat auch den Vorteil, dass das Gewicht des Gehäuses nur so wenig vergrößert wird, dass die Handhabung, insbesondere bei der Montage, nicht erschwert wird und auch sonst keine zusätzlichen Erfordernisse entstehen.

Wenn die Verstärkung vorstehend und im Folgenden als Auflage bezeichnet wird, impliziert das nicht die Notwendigkeit, dass die Verstärkung vollflächig an dem sie tragenden Gehäuseteil anliegen muss. Ferner soll die Verwendung des Begriffes "flächige Auflage" nicht bedeuten, dass es sich um eine geschlossene also ununterbrochene Auflage handeln muss.

Vielmehr kann die wenigstens eine flächige Auflage auch als Lochplatte ausgebildet sein oder zum Beispiel eine gitterartige Struktur aufweisen. Sie kann auch rahmenartig ausgebildet sein, derart, dass sie außenseitig und/oder innenseitig an einem Wandbereich anliegt, welcher mit einem Vorsprung versehen sein kann, der die vom Rahmen innenseitig begrenzte Fläche ausfüllt. Es ist vorteilhaft, wenn die äußeren Begrenzungen der die Verstärkung bildenden Auflage, welche eben ausgebildet sein kann, an die Abmessungen des die Verstärkung tragenden Gehäuseteiles angepasst ist, derart, dass die äußeren Begrenzungen der Auflagen möglichst nahe an den entsprechenden äußeren Begrenzungen des Gehäuses verlaufen, ggf. an die äußere Kontur der sie tragenden Gehäuseflächen zumindest teilweise angepasst sind. So können die Auflagen sich über nahezu die gesamte Länge und/oder Höhe der sie tragenden Flächen erstrecken. Dadurch, also durch die großflächige Anlage der Auflagen am Gehäuse, wird auch eine geringe Flächenpressung erreicht. Dies führt ebenfalls zu einer entsprechend geringen Belastung des Gehäuses durch die beim Betrieb des Stellantriebes auftretenden Kräfte.

Die Erfindung ist für Einzel- und Doppelantriebe anwendbar.

Ein Einzelantrieb zeichnet sich dadurch aus, dass ein Elektromotor mit dem Gehäuse verbunden ist, welchem ein Getriebezug nachgeschaltet ist. Der Getriebezug ist wenigstens einstufig ausgebildet. Ein Doppelantrieb zeichnet sich dadurch aus, dass wenigstens ein Elektromotor mit dem Gehäuse verbunden ist, wobei dem wenigstens einen Elektromotor zwei Getriebezüge nachgeschaltet sind. Getriebezüge der zuvor genannten Art umfassen Schneckengetriebe, Stirnradgetriebe, Gewindespindelgetriebe, Hebelgetriebe sowie deren Kombinationen, z.B. Schneckengetriebe, Spindelgetriebe. Der letzte Getriebezug bildet das Abtriebsglied des Antriebszuges, welches in der Montagestellung des linearen Stellantriebs mit einem angeschlossenen Bauteil, beispielsweise mit einem als Möbelbauteil ausgebildeten angeschlossenen Bauteil, in Wirkverbindung steht und bei Betrieb des Elektromotors dieses angeschlossene Bauteil relativ zu einem anderen Bauteil bewegt. Der letzte Getriebezug vollführt je nach dessen Aufbau eine lineare Bewegung, eine Schwenkbewegung oder eine Rotationsbewegung.

Die flächige Verstärkung, die auch als rahmenartiges Teil ausgebildet sein oder aufweisen kann, können auch dazu verwendet werden, zwei Einzelantriebe, gegebenenfalls unter Zwischenschaltung von Distanzstücken zu einem Doppelantrieb miteinander zu verbinden.

Die flächige Ausbildung einer solchen rahmenartigen Verstärkung wird z. B. dadurch erreicht, dass die einzelnen Abschnitte desselben möglichst nahe der äußeren Begrenzung des Gehäuses verlaufend angeordnet sind.

Die wenigstens eine Auflage des Gehäuses kann mit einem Fortsatz, einer Verlängerung oder dgl. versehen sein, der bzw. die mit dem zu verstellenden Möbelteil oder dgl. verbunden ist. Hier wirkt die Verstärkungsauflage zugleich als Drehmomentstütze. Auflage und Fortsatz können einstückig, aber auch mehrteilig ausgebildet sein.

In der Zeichnung sind einige Ausführungsbeispiele der Erfindung dargestellt. Es zeigen:
Fig. 1 die perspektivische Ansicht eines außenseitig mit einer Verstärkungsauflage versehenen Gehäuses für einen Doppelantrieb,
Fig. 2 eine Fig. 1 entsprechende Darstellung mit vom Gehäuse abgenommen dargestellter Verstärkungsauflage,
Fig. 3 eine perspektivische Ansicht des Gehäuses gemäß den Fig. 1 und 2, jedoch in auseinandergezogener Darstellung des eigentlichen Gehäuses und der wesentlichen Antriebs- und Getriebekomponenten.
Fig. 4 eine Prinzipdarstellung einer zweiten Ausführungsform des Getriebezuges eines Stellantriebs,
Fig. 5 perspektivische Ansicht eines Einzelantriebes mit zwei Verstärkungsauflagen,
Fig. 6 die Ansicht gemäß Fig. 5, jedoch in auseinandergezogener Darstellung insbesondere der Verstärkungsauflagen,
Fig. 7 in perspektivischer Ansicht zwei über die Verstärkungsauflage zu einem Doppelanrieb miteinander verbundene Stellantriebe gemäß Fig. 5,
Fig. 8 einen Stellantrieb gemäß Fig. 5 mit verlängerter Auflage zur Anbringung an einem Möbelteil.

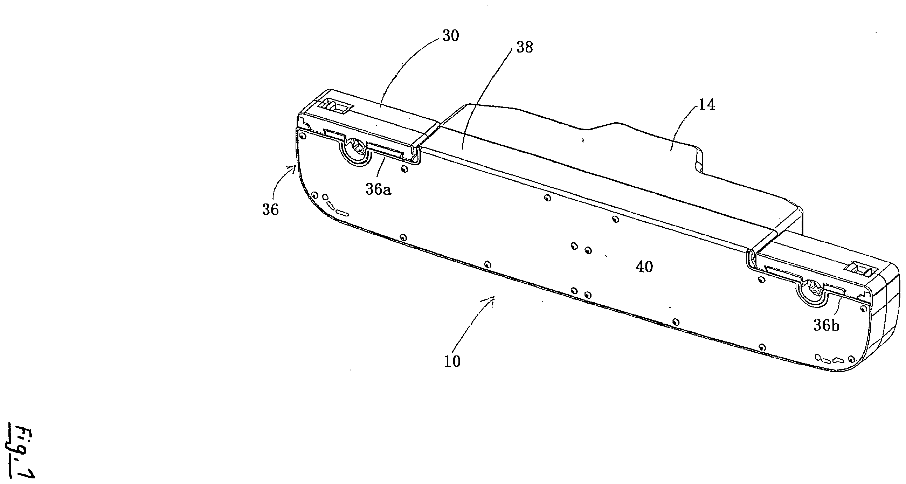

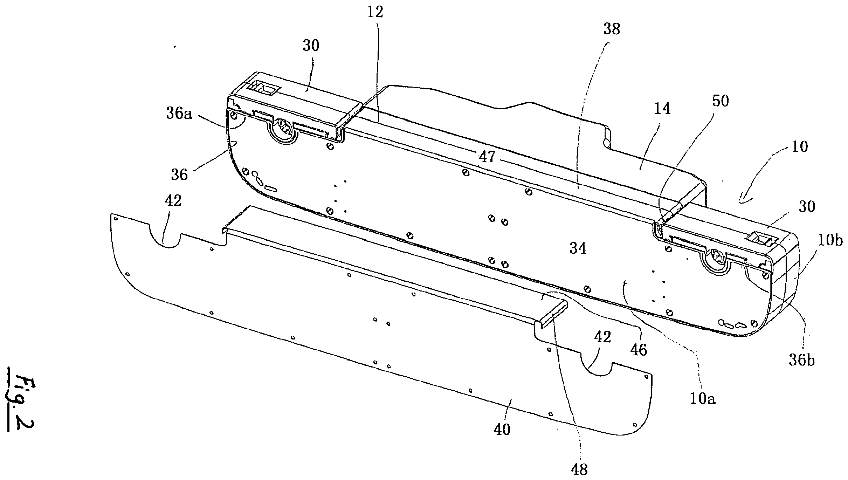

Das gemeinsame Gehäuse 10 für einen Doppelantrieb des Ausführungsbeispiels der Figuren 1 bis 3 besteht aus zwei Teilen 10a, 10b, die entlang der Trennebene 12 zusammengefügt sind, und einer vom unteren Gehäuseteil 10b getragenen Abdeckhaube 14, in welcher außerhalb des eigentlichen Gehäuses befindliche weitere Komponenten für die beiden Stellantriebe untergebracht sind.

Jedem der beiden Einzelantriebe ist ein E-Motor 16 zugeordnet. Das mit einem Schneckengewinde versehene Ende 18 der Abtriebswelle jedes Motors kämmt mit einem Schneckenrad 20, welches fest an einer Gewindespindel 22 angebracht ist. Auf Letzterer sitzt nicht rotierbar eine Spindelmutter 24, welche mit einem Schieber 26 verbunden ist, an welchem ein nicht dargestellter Hebel gelenkig angebracht ist, der mit einer im Wesentlichen quer zur jeweiligen Spindel 22 verlaufenden, nicht dargestellten Welle verbunden ist, welche in jeweils einem nahe dem Ende des Gehäuses 10 vorgesehenen Sitz 28 gelagert ist. In montiertem Zustand des Gehäuses wird jeder der von beiden Gehäuseteilen 10a, b gebildeten Sitze 28 jeweils durch einen gemeinsamen deckelartigen Verschluss 30 derart komplettiert, dass ein geschlossener Sitz entsteht.

Eine Rotation der Gewindespindel 22 bewirkt über Spindelmutter 24 und Schieber 26 eine Schwenkbewegung des Hebels, der über der Welle mit dem Bauteil, insbesondere einem Möbelbauteil, verbunden ist, dessen Position durch Betätigung des Stellantriebs, relativ zu einem anderen Möbelbauteil verändert werden soll.

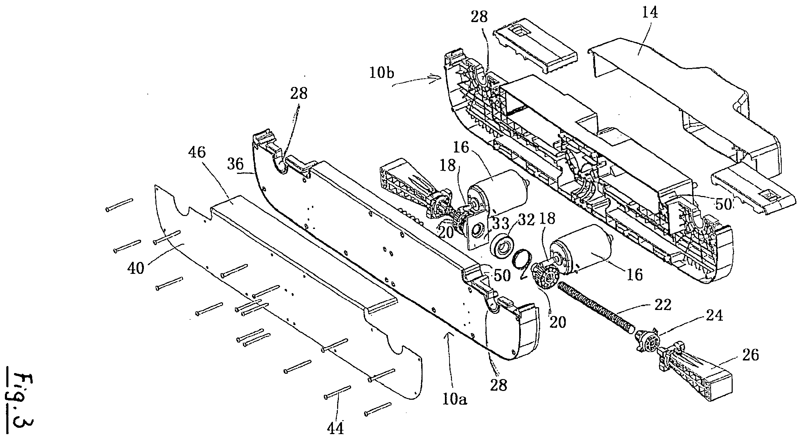

An dem der Spindelmutter 24 abgekehrten Seite jedes Schneckenrades 20 ist auf der Spindel ein Kugellager 32 angebracht, welches im Gehäuse 10 gelagert ist und die bei Betätigung wenigstens eines der Stellantriebe auftretenden Kräfte auf das Gehäuse überträgt. Das Kugellager 32 stützt sich stirnseitig an einem plattenförmigen Widerlager 33 ab, welches Teil des Gehäuses ist. Gemäß der Darstellung nach Figur 3 ist das Widerlager 33 als plattenförmiges Element in das Gehäuse 10 eingesetzt. Eine andere Ausführung eines Widerlagers ist durch einen Ansatz oder durch Stegvorsprünge des Gehäuses gebildet, welche neben dem Kugellager 32 im Gehäuse angeordnet sind und dessen Außenring kontaktieren. Eine weitere Kraftübertragung zwischen dem jeweiligen Antrieb und dem Gehäuse erfolgt über den Sitz 28 für die Welle, an welcher ein aufgesetzter Hebel fest angebracht ist, auf den der Schieber 26 der Spindelmutter 24 einwirkt, um die Welle zu rotieren. Dies hat zur Folge, dass jeder der beiden Stellantriebe auf die ihm jeweils zugeordnete Gehäusehälfte Zugbeanspruchungen aufbringt, durch die das Gehäuse 10 insgesamt im Wesentlichen auf Biegung beansprucht wird.

An der der Abdeckhaube 14 abgekehrten Seite ist das Gehäuseteil 10a des Gehäuses 10 mit einem auf einem Teilabschnitt seines Umfangs umlaufenden, gegenüber der Fläche 34 vorstehenden Rand 36 versehen, der sich in den stirnseitigen Endbereichen des Gehäuses mit zwei Teilabschnitten 36a bzw. 36b fortsetzt, die jeweils neben den deckelartigen Verschlüssen 30 und im Wesentlichen parallel zu diesen bis zum mittleren Abschnitt 38 des Gehäuses 10 verlaufen, der gegenüber den Endbereichen mit den deckelartigen Verschlüssen 30 abgesetzt ist derart, dass mit aufgesetzten Verschlüssen 30 eine mehr oder weniger durchgehende Oberfläche entsteht.

Der Rand 36 bildet einen Sitz für eine flächige Auflage 40, deren Kontur der der im Wesentlichen ebenen Fläche 34 angepasst ist und somit im Bereich der beiden Verschlüsse 30 auch mit jeweils einem Ausschnitt 42 für die von den Stellantrieben jeweils rotierte Welle versehen ist. Die Dicke der Auflage 40 entspricht der Erstreckung des Randes 36 senkrecht zur Fläche 34, so dass bei auf der Fläche 24 aufgesetzter Verstärkung das Gehäuse an dieser Seite eine glatte Oberfläche aufweist. Die Erstreckung des Randes 36 kann auch wenigstens dem 1,1fachen der Dicke der Auflage 40 entsprechen. Im montierten Zustand kann sich ein geringfügiger Spalte zwischen dem Rand 36 und der Auflage 40 einstellen, insbesondere um die Montage der Auflage 40 an dem Gehäuse 10a, 10b zu erleichtern. Im Betriebszustand des Stelltriebs reduziert sich der Spalt unter der Einwirkung der dabei auftretenden Kräfte zumindest abschnittsweise auf 0, so dass der Rand 36 abschnittsweise an der Kante oder an einem Versatz der Auflage 40 anliegt und so dann die Auflage 40 einige der an dem Gehäuseteilen 10a, 10 b wirkenden Kräfte aufnimmt. Die Auflage bzw. Abdeckung 40 wird mittels Schrauben 44 am Gehäuseteil 10a befestigt. Alternativ verbindet die Schrauben 44 die Gehäuseteile 10a, 10b und die Auflage 40 miteinander.

Die flächige Auflage 40 ist an ihrer die Ausnehmungen für die Welle 42 aufweisenden Seite mit einem etwa rechtwinklig abgebogenen Fortsatz 46 versehen, der in montiertem Zustand der Teile die zwischen den beiden deckelartigen Verschlüssen 30 verlaufende Begrenzungsfläche des mittleren, vorstehenden Abschnittes 38 abdeckt, wie dies in Fig. 1 dargestellt ist.

Der Fortsatz 46 ist gegenüber den beiden angrenzenden, jeweils die Ausnehmung 42 aufweisenden Endbereichen der Auflage 40 etwas abgesetzt. Die beiden stirnseitigen Enden 48 des Fortsatzes 46 sind derartig begrenzt, dass sie etwa in senkrecht zu den Gewindespindeln 22 verlaufenden Ebenen sich erstrecken und in montiertem Zustand der Teile die stirnseitigen Begrenzungen 50 des mittleren Abschnittes 38 des Gehäuses 10 hintergreifen derart, dass ein Formschluss auch zwischen dem Fortsatz 46 und dem Gehäuse entsteht.

Durch die erfindungsgemäße Ausgestaltung wird erreicht, dass über die Befestigungsschrauben 44, den Rand 36 und die ebenfalls formschlüssige Verbindung zwischen dem Fortsatz 46 und dem Gehäuse auf Letzteres einwirkende Kräfte, insbesondere solche, die zu Biegebeanspruchungen führen, von der Verstärkungsauflage aufgenommen werden, die bezüglich ihrer Festigkeitseigenschaften in Abhängigkeit von den jeweiligen Gegebenheiten ausgewählt werden kann. Die von der Erfindung vorgeschlagene Lösung des einleitend beschriebenen Problems ist einfach und kostengünstig. Die Ausgestaltung des Fortsatzes insbesondere bezüglich der den Formschluss bewirkenden Mittel zeichnet sich dadurch aus, dass der angestrebte Effekt erreicht wird, ohne dass im Bereich des abgewinkelten Fortsatzes 46 eine zusätzliche Verbindung mittels Schrauben oder dgl. notwendig, wenngleich möglich wäre. Da der Formschluss zwischen Fortsatz 46 und Gehäuse 10 beide Gehäuseteile 10a, 10b umfasst, wird im Normalfall eine einseitige Anbringung der Verstärkungsauflage zur Erzielung des angestrebten Effektes ausreichen.

Wenn vorstehend und im Folgenden von unterem oder oberem Gehäuseteil die Rede ist, soll eine andere Positionierung nicht ausgeschlossen sein, bei welcher z. B. die Teile des montierten Gehäuses seitlich nebeneinander oder in anderer Weise angeordnet sind.

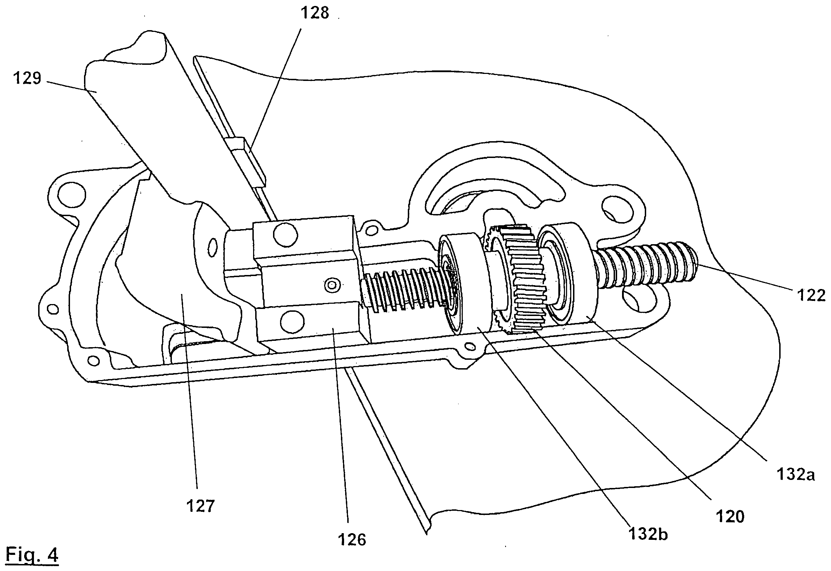

Von dem in Figur 4 gezeigten Ausführungsbeispiel, in welchem gleiche Teile mit gleichen, um jeweils 100 höheren Bezugszeichen versehen sind, ist jeweils nur eine Gehäusehälfte mit darin angeordnetem Spindeltrieb dargestellt. Es unterscheidet sich von dem Ausführungsbeispiel gemäß den Figuren 1 bis 3 einmal dadurch, dass das Schneckenrad 120, dessen Antriebsmotor und Schneckenspindel nicht dargestellt sind, mit einem Innengewinde versehen ist, welches mit dem Spindelgewinde in Eingriff ist derart, dass bei Rotation des Schneckenrades die Gewindespindel 122 eine Längsverschiebung erfährt. Hier ist der Schieber 126 direkt mit der Gewindespindel 122 verbunden, so dass die zu beiden Seiten des Schneckenrades 120 angeordneten Lager 132a, 132b für das Schneckenrad auch die Kräfte aufnehmen und in das Gehäuse weiterleiten. Die beiden Lager 132a und 132b können zu einer Baueinheit zusammengefasst sein. Analog dem Ausführungsbeispiel gemäß den Figuren 1 bis 3 ist hier ebenfalls ein gelenkig mit dem Schieber 126 verbundener Hebel 127 vorgesehen, welcher fest mit der Antriebswelle 129 verbunden ist, die ihrerseits in Wirkverbindung mit dem zu verstellenden Möbelteil ist.

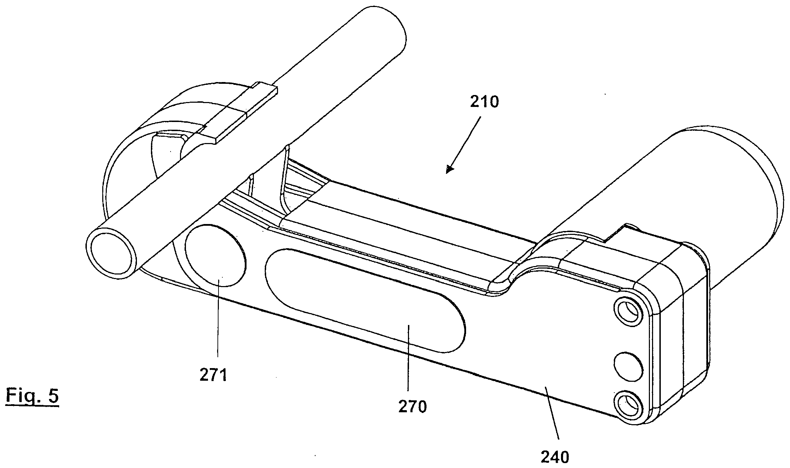

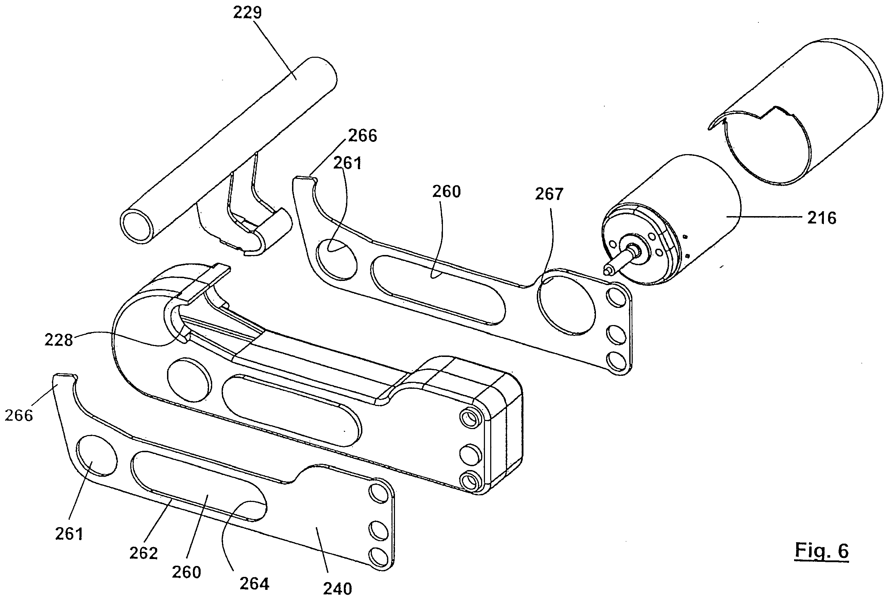

Das Gehäuse ist abweichend von der Ausführungsform gemäß den Figuren 1 bis 3 mit einem Sitz 128 versehen, welcher die Welle 129 über einen größeren Umfangsbereich umgreift, wie es auch im folgenden Ausführungsbeispiel gemäß den Figuren 5 und 6 der Fall ist. Welcher der beiden in den Figuren 1 bis 3 bzw. in Fig. 4 dargestellten Spindelantriebs jeweils verwendet wird, hängt von den jeweiligen Umständen ab. Die jeweiligen Verstärkungsauflagen können unabhängig von der Art des Spindeltriebes angebracht sein.

In den Figuren 5 und 6 ist ein Ausführungsbeispiel eines Einzelantriebs dargestellt, jedoch mit einer Verstärkungsauflage auf jeder der gegenüberliegenden Seiten des Gehäuses. Mit dem Ausführungsbeispiel gemäß den Figuren 1 bis 3 überstimmende Teile sind mit gleichen, jeweils um 200 höheren Bezugszeichen versehen.

Der Einzelantrieb ist mit einem mit dem Gehäuse 210 verbundenen E-Motor 216 versehen, dem ein Getriebe nachgeschaltet ist. Dieses kann entsprechend dem in den Figuren 1 bis 3 dargestellten Getriebezug oder dem gemäß dem der Figur 4 ausgebildet sein. Die an beiden Längsseiten des Gehäuses außenseitig angebrachten Verstärkungsauflagen 240 sind mit zwei Ausnehmungen 260 und 261 versehen. Die beiden in Längsrichtung des Gehäuses sich erstreckenden Schenkel 262 des die erste Ausnehmung 260 begrenzenden rahmenförmigen Abschnittes der Verstärkung sind nahe der - auf die bildliche Darstellung bezogen - oberen und unteren Begrenzung des Gehäuses positioniert und an ihren Enden jeweils durch einen bogenförmigen Abschnitt miteinander verbunden. Die zweite, kreisförmige Ausnehmung 261 ist näher an dem dem Motor 216 abgekehrten Ende angeordnet. Dort setzen sich die Auflagen 240 jeweils in einen nach oben gerichteten Fortsatz 266 fort.

An diesem Ende des Gehäuses 210 ist dieses oberseitig mit einem Sitz 228 für eine Welle 229 versehen, welche durch den nicht dargestellten Getriebezug auf die im Zusammenhang mit den Figuren 1 bis 4 beschriebene Weise rotiert wird. Dieser Sitz 228 ist so angeordnet und ausgebildet, dass er die Welle 229 übergreift, wobei der Fortsatz 266 der Auflage 240 den Bereich des Sitzes 228 ebenfalls verstärkt und abstützt.

Jede der beiden seitlichen Wände des Gehäuses 210 ist mit vorspringenden Bereichen 270 und 271 versehen, deren äußere Kontur jeweils an die Begrenzung der Ausnehmung 260 bzw. 261 angepasst ist derart, dass zwischen Auflage 240 und den Vorsprüngen eine formschlüssige Verbindung entsteht, durch welche Kräfte vom Gehäuse auf die jeweilige Auflage übertragen werden können.

Da die Gehäuseteile üblicherweise mittels Spritzgießen aus Kunststoff hergestellt werden, erfordert das Anbringen der Vorsprünge 270, 271 keinerlei zusätzlichen Aufwand. Selbstverständlich ist es möglich, den Ausnehmungen und den jeweils zugehörigen Vorsprüngen eine andere Form zu geben, gegebenenfalls auch mehr oder weniger Ausnehmungen bzw. Vorsprünge vorzusehen, wobei dann die Auflage auch entsprechend, beispielsweise gitterförmig ausgebildet sein kann. Die Höhe des Vorsprunges, um welche dieser gegenüber der jeweiligen Wand des Gehäuses vorsteht, sollte zweckmäßigerweise der Dicke der Auflage angepasst sein. Ist ein Vorsprung beispielsweise bei einer Schraube vorgesehen, ist dieser etwas flacher ausgebildet als die Dicke der Auflage 240. Die an der mit dem Motor 216 versehenen Seiten des Gehäuses angebrachte Auflage 240 ist mit einer zusätzlichen Ausnehmung 267 versehen, welche dem Durchmesser des Motors, der Motorwelle oder eines anderen Motorteils angepasst ist. Die Gehäuseteile und die Auflagen können, wie auch bei den anderen Ausführungsbeispielen, durch gemeinsame Schrauben zusammengehalten werden, wie dies beim Ausführungsbeispiel gemäß den Fig. 5 und 6 vorhandenen Schraubenlöcher angedeutet ist. Alternativ werden die Auflage 240 und die Gehäuseteile 10a, 10b miteinander verbunden. Dazu sind für die nicht näher dargestellten Schrauben in der jeweiligen Auflage 240 Schraubbohrungen oder Schraubausschnitte zum Einbringen der Schrauben vorgesehen. Bei einer Verformung des Kunststoffgehäuses begründet durch die Kräfte des Betriebszustandes kann das Durchführen der Schrauben durch die Auflagen 240 in das Gehäuse als Elemente zur Formschlussverbindung angesehen werden.

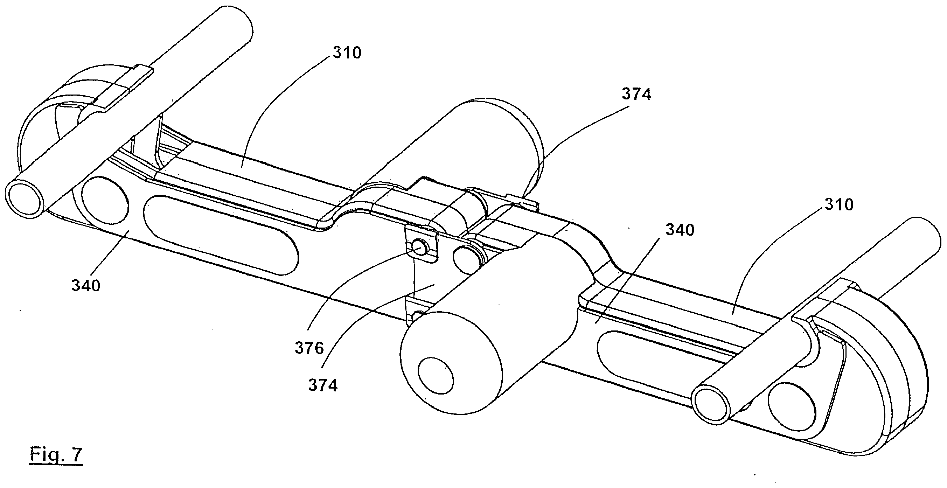

In Fig. 7 sind zwei miteinander "in Reihe" angeordnete Einzelantriebe zu einem Doppelantrieb verbunden. Mit den vorstehend erörterten Ausführungsbeispielen übereinstimmende Teile sind mit gleichen, jedoch gegenüber dem Ausführungsbeispiel gemäß Fig. 1 bis 3 um 300 höheren Bezugszeichen versehen. Die Verbindung der beiden Einzelantriebe erfolgt über die Auflagen 340 beider Einzelantriebe. Diese Auflagen sind in gleicher Weise ausgebildet wie beim Ausführungsbeispiel gemäß den Fig. 5 und 6. Die Anbringung beider Einzelantriebe aneinander erfolgt über Laschen 374, welche zu beiden Seiten der miteinander fluchtenden Gehäuse angeordnet sind, wobei durch Schrauben 376 die Teile zusammengehalten werden. Diese Schrauben können auch gleichzeitig dazu dienen, die Gehäuseteile und die Auflagen miteinander zu verbinden. Die Laschen haben auch die Funktion, bei Betrieb wenigstens eines der beiden Einzelantriebe auftretenden Kräfte, die auf den jeweils anderen Einzelantrieb einwirken, auf die Auflagen, also die Verstärkungen des jeweils anderen Einzelantriebes zu übertragen und so das eigentliche Gehäuse durch diese Kräfte so wenig wie möglich zu beanspruchen. Zur Vereinfachung der Montage des einzelnen Stelltriebs an dem Möbel oder der Stelltriebe an dem Möbel sind statt der Schrauben 376 Bolzen oder Stifte mit geeigneten Sicherungsmitteln gegen Herausfallen vorgesehen.

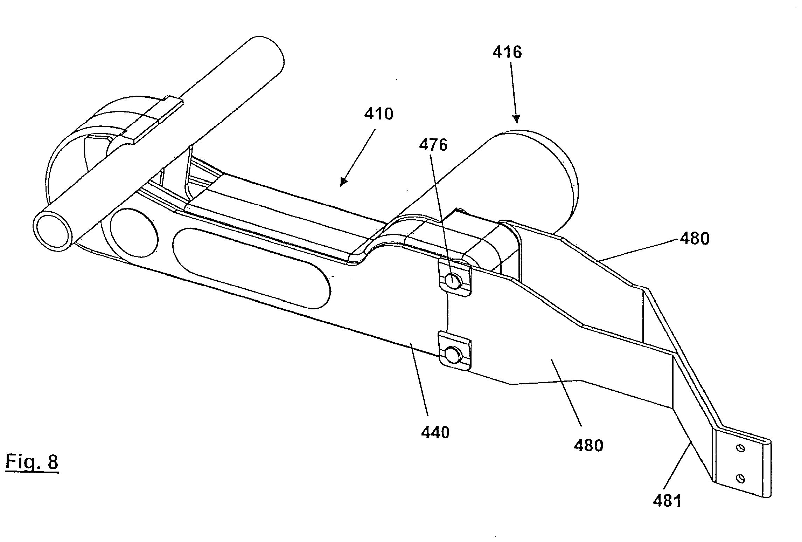

In Figur 8 ist eine weitere Ausführungsform eines Einzelantriebes dargestellt, dessen grundsätzlicher Aufbau ebenfalls dem des Ausführungsbeispiels gemäß den Fig. 5 und 6 entspricht. Gleiche Teile sind hier mit gleichen, gegenüber dem Ausführungsbeispiel gemäß den Fig. 1 bis 3 um 400 höhere Bezugszeichen versehen. Das Besondere der Ausführungsform gemäß Fig. 8 besteht darin, dass der Einzelantrieb an seinem den Motor 416 aufweisenden Ende mit zwei Laschen 480 versehen ist, von denen jede mit einer der beiden Auflagen 440 über Schrauben 476 oder durch Bolzen oder Stifte verbunden ist. Der Einzelantrieb kann über diese beiden Laschen, die zugleich als Drehmomentstütze wirken, mit dem zu verstellenden Möbelteil verbunden sein mit dem Ergebnis, dass auch hier wesentliche Teile der bei Betrieb des Antriebes auftretenden Kräfte auf die Auflage übertragen werden. Die beiden Laschen 480, die an ihren freien Enden zusammengeführt sind, weisen eine Abwinklung 481 auf, die entsprechend den jeweiligen Gegebenheiten ausgestaltet sein kann, um den Erfordernissen des Einzelfalles Rechnung zu tragen. Selbstverständlich können die Auflagen und die Laschen 480 auch einstückig ausgebildet sein abhängig davon, wie im Einzelnen die Laschen bzw. die Verbindung zwischen diesen und dem zu bewegenden Möbelteil oder dgl. beschaffen sind.

Die Abwinklung 481 ist gemäß diesem Ausführungsbeispiel mit einer Anzahl Bohrungen zur Festlegung an einem Möbelbauteil versehen. Das betreffende Möbelbauteil ist bevorzugt als Grundrahmen des Möbels ausgebildet. Alternativ ist das betreffende Möbelbauteil mit dem Grundrahmen des Möbels verbunden und ist beispielsweise als Querverbindung oder Traverse ausgebildet. Alternativ ist das betreffende Möbelbauteil relativ zu einem weiteren Möbelbauteil beweglich ausgebildet und beispielsweise als bewegbarer Rahmen des Rückenteils eines Lattenrostes ausgestaltet.

Die Verbindung der beiden Einzelantriebe zu einem Doppelantrieb kann auch unter Verwendung von Distanzstücken erfolgen, die mit den Verstärkungsauflagen der Einzelanriebe verbunden sind. Durch die Wahl der Länge dieser Distanzstücke kann auf einfache Weise den jeweiligen räumlichen Gegebenheiten Rechnung getragen werden.

Ferner können mehrere Einzelantriebe durch eine einstückige Verstärkungsauflage miteinander verbunden sein. Denkbar wären auch eine Anzahl einstückiger Verstärkungsauflagen, welche sich im Wesentlichen entlang der Längsachse des Stelltriebs erstrecken. Eine Längserstreckung bzw. Längsachse ist üblicherweise rechtwinklig zu der Schwenkachse eines beweglich gelagerten und schwenkenden Möbelbauteils angeordnet. Die besagte Schwenkachse des beweglichen Möbelbauteils ist parallel zur Welle 129 ausgerichtet.

Gemeinsam ist allen Ausführungsbeispielen, dass die Verstärkungsauflage sich mehr oder weniger über die gesamte Höhe des Gehäuses erstreckt. Dadurch wird auch die Verwindungssteifigkeit des Gehäuses erhöht.

Ebenso gemeinsam ist eine Kraftaufnahme durch die Verstärkungsauflagen, jedoch wenigstens in einem Abschnitt des Gehäuses zwischen Sitz der Welle 129 bis zu dem Kraft aufnehmendem Welzlager 32, bzw. 132a, 132b. Ferner ist ein Fortsatz 266 der Verstärkung gemeinsam, welcher benachbart zum Sitz 28 der Welle 129 bzw. ist und Kräfte, die auf die Welle 129 einwirken, von dem Gehäuse aufnimmt.

### Bezugzeichenliste

10 Gehäuse
10a, b Gehäuseteil
12 Trennebene
14 Abdeckhaube
16 E-Motor
18 Schneckenwelle
20 Schneckenrad
22 Gewindespindel
24 Spindelmutter
26 Schieber
28 Sitz für Welle
30 Verschluss
32 Kugellager
33 Widerlager
34 Fläche, Gehäuseseite
36 Rand
36a, b Abschnitte von 36
38 mittlerer Abschnitt von 10
40 Auflagen
42 Ausnehmung
44 Schrauben
46 Fortsatz von 40
47 zweiter Flächenbereich
48 stirnseitiger Abschnitt von 46
50 stirnseitige Begrenzung von 38
117 Gehäuse
132a, b Lager
127 Hebel
129 Welle
216 E-Motor
260 erste Ausnehmung
261 zweite Ausnehmung
262 Schenkel
264 bogenförmiger Abschnitt
266 Fortsatz
267 zusätzliche Ausnehmung
270 Vorsprung
271 Vorsprung
374 Lasche
376 Schraube
460 Ausnehmung
480 Lasche
481 Abwinklung

## Patentansprüche

1. Linearer Stellantrieb mit einem wenigstens zwei Teile (10a, b) aufweisenden Gehäuse (10), in welchem wenigstens ein Schneckengetriebe mit einer Schneckenwelle (18) und einem Schneckenrad (20), die Teil eines Getriebezuges sind, untergebracht ist, und einem die Schneckenwelle antreibenden Motor (16) und einer mit dem Schneckenrad (20) verbundenen Spindel (22) und einer Spindelmutter (24), wobeider Stellantrieb ein Lager (32) für die Spindel (2) aufweist und die Spindelmutter (24) von der Spindel getragenen und gegen Rotation gesichert ist und das Gehäuse (240) mit einer eine Verstellwelle (229) aufnehmenden Ausnehmung (228) versehen ist, **dadurch gekennzeichnet, dass** das Gehäuse (10) an wenigstens einer seiner beiden Seiten mit einer als flächige Auflage ausgebildeten Verstärkung (40) aus einem festeren Material versehen und die Verstärkung formschlüssig mit dem Gehäuse (10) verbunden ist und in Längsrichtung des Gehäuses verläuft, wobei die Auflage (240) die die Verstellwelle (129, 229) aufnehmende Ausnehmung (228) des Gehäuses wenigstens teilweise umgreift, wobei die mit der Auflage (40) versehene wenigstens eine Seite (34) des Gehäuses (10) mit einer der Kontur der Auflage (40) entsprechenden Halterung (36, 36a, b) versehen ist, und die Halterung (36) als vorspringender Kragen ausgebildet ist, dessen Abmessungen senkrecht zu der die Auflage aufnehmenden Gehäusefläche (34) vorzugsweise der Dicke der Auflage entspricht, wobei die einer ersten Gehäuseseite (34) zugeordnete tragende Auflage (40) wenigstens einen abgewinkelten Fortsatz (46) aufweist und die Ausgestaltung der so gebildeten profilierten Verstärkung an die Form des Gehäuses (10) angepasst ist derart, dass der abgewinkelte Fortsatz (46) einen zweiten Flächenbereich (47) des Gehäuses (10) abdeckt, welcher gegenüber dem ersten Flächenbereich (34) des Gehäuses entsprechend abgewinkelt ist, und die stirnseitigen Enden (48) des abgewinkelten Fortsatzes (46) abgebogen sind derart, dass sie im montiertem Zustand der Auflage (40) jeweils eine entsprechend positionierte Fläche (50) des Gehäuses hintergreifen.

2. Linearer Stellantrieb mit einem wenigstens zwei Teile (10a, b) aufweisenden Gehäuse (10), in welchem wenigstens ein Schneckengetriebe mit einer Schneckenwelle (18) und einem Schneckenrad (120), die Teil eines Getriebezuges sind, untergebracht ist, und einem die Schneckenwelle antreibenden Motor (16) und einer mit dem Schneckenrad (120) verbundenen, gegen Rotation gesicherten Spindel (22, wobei ein Innengewinde des Schneckenrades (120) mit dem Gewinde der Spindel (122) in Eingriff ist, und einem Lager (32) für das Schneckenrad (20), und wobei das Gehäuse (240) mit einer eine Verstellwelle (229) aufnehmenden Ausnehmung (228) versehen ist, **dadurch gekennzeichnet, dass** das Gehäuse (10) an wenigstens einer seiner beiden Seiten mit einer als flächige Auflage ausgebildeten Verstärkung (40) aus einem festeren Material versehen und die Verstärkung formschlüssig mit dem Gehäuse verbunden ist und in Längsrichtung des Gehäuses verläuft und die Auflage (240) die die Verstellwelle (129, 229) aufnehmende Ausnehmung (228) des Gehäuses wenigstens teilweise umgreift, wobei die mit der Auflage (40) versehene wenigstens eine Seite (34) des Gehäuses (10) mit einer der Kontur der Auflage (40) entsprechenden Halterung (36, 36a, b) versehen ist, und die Halterung (36) als vorspringender Kragen ausgebildet ist, dessen Abmessungen senkrecht zu der die Auflage aufnehmenden Gehäusefläche (34) vorzugsweise der Dicke der Auflage entspricht, wobei die einer ersten Gehäuseseite (34) zugeordnete tragende Auflage (40) wenigstens einen abgewinkelten Fortsatz (46) aufweist und die Ausgestaltung der so gebildeten profilierten Verstärkung an die Form des Gehäuses (10) angepasst ist derart, dass der abgewinkelte Fortsatz (46) einen zweiten Flächenbereich (47) des Gehäuses (10) abdeckt, welcher gegenüber dem ersten Flächenbereich (34) des Gehäuses entsprechend abgewinkelt ist, und die stirnseitigen Enden (48) des abgewinkelten Fortsatzes (46) abgebogen sind derart, dass sie im montiertem Zustand der Auflage (40) jeweils eine entsprechend positionierte Fläche (50) des Gehäuses hintergreifen.

3. Stellantrieb nach Anspruch 1 oder 2, **dadurch ge-kennzeichet**, dass die Verstärkung außen an wenigstens einer Seite des Gehäuses (10) angebracht ist.

4. Stellantrieb nach einem der vorhergehenden Ansprüche, **dadurch gekennzeichnet, dass** die Verstärkung innenseitig an wenigstens einer Seite des Gehäuses (10) angebracht ist.

5. Stellantrieb nach einem der vorhergehenden Ansprüche, **dadurch gekennzeichnet, dass** eine Auflage außen an beiden Seiten des Gehäuses angebracht ist.

6. Stellantrieb nach einem der vorhergehenden Ansprüche, **dadurch gekennzeichnet, dass** die Auflage (40) eine vollflächige Platte aufweist.

7. Stellantrieb nach einem der vorhergehenden Ansprüche, **dadurch gekennzeichnet, dass** die Auflage (40) eine Lochplatte aufweist.

8. Stellantrieb nach einem der vorhergehenden Ansprüche, **dadurch gekennzeichnet, dass** die Auflage eine gitterartige Struktur aufweist.

9. Stellantrieb nach einem der vorhergehenden Ansprüche, **dadurch gekennzeichnet, dass** er zwei in einem gemeinsamen Gehäuse (10) untergebrachte Einzelantriebe aufweist und das gemeinsame Gehäuse mit einer Auflage (40) versehen ist.

10. Stellantrieb nach einem der Ansprüche 1 - 9, **dadurch gekennzeichnet, dass** der abgewinkelte Fortsatz (46) eine kürzere Längserstreckung aufweist als der den ersten Flächenbereich (34) des Gehäuses (10) zugeordnete Teil der Auflage (40).

11. Stellantrieb nach Anspruch 13, **dadurch gekennzeichnet, dass** der abgewinkelte Fortsatz (46) die Flächenbereiche beider Gehäuseteile (10a, b) übergreift und hintergreift.

12. Stellantrieb nach einem der vorhergehenden Ansprüche, **dadurch gekennzeichnet, dass** die Auflage (40) mittels Schrauben (44) am ersten Flächenbereich (34) befestigt ist.

13. Stellanrieb nach einem der vorhergehenden Ansprüche, d a - **durch gekennzeichnet**, dass das Gehäuse (410) über die Verstärkungsauflage(n) mit dem zu verstellenden Möbelteil verbunden ist.

14. Stellantrieb nach Anspruch 18, **dadurch gekennzeichnet, dass** die wenigstens eine Auflage (440) mit einer Verlängerung (480) versehen ist, die die Verbindung mit dem zu bewegenden Möbelteil herstellt.

15. Als Doppelantrieb ausgebildeter Stellantrieb nach einem der vorhergehenden Ansprüche, **dadurch gekennzeichnet, dass** beide in Reihe angeordneten Einzelantriebe mittels Verstärkungsauflagen (340) gegebenenfalls unter Zwischenschaltung vom Distanzelement, kraftmäßig miteinander verbunden sind.

## Claims

1. Linear actuating drive with a housing (10), comprising at least two parts (10a, b) that houses at least one worm gear with a worm shaft (18) and a worm wheel (20) that are part of a gear train, and a motor (16) that drives the worm shaft and a spindle (22) connected with the worm wheel (20) and a spindle nut (24), wherein the actuating drive has a bearing (32) for the spindle (2) and the spindle nut (24) is supported by the spindle and secured against rotation and the housing (240) is provided with a recess (228) that receives an adjusting shaft (229), **characterized in that** the housing (10) is connected, at least on one of its two sides, with a reinforcement (40) made of a stronger material that is configured as a flat support and the reinforcement is positively connected to the housing (10) and extends in longitudinal direction of the housing, wherein the support (240) at least partially encompasses the recess (228) of the housing that houses the adjusting shaft (129, 229), wherein the at least one side (34) of the housing (10) that is provided with the support (40) is provided with a mount (36, 36a, b) corresponding to the contour of the support (40), and the mount (36) is configured as a projecting collar, the dimensions of which perpendicularly to the housing surface (34) that houses the support preferably correspond to the thickness of the support, wherein the carrying support (40) that is associated to a first housing side (34) comprises at least one angled extension (46) and the configuration of the reinforcement thus formed with a profiled shape is adapted to the shape of the housing (10) in such a manner that the angled extension (46) covers a second surface region (47) of the housing (10) that is correspondingly angled to the first surface region (34) of the housing and the frontal ends (48) of the angled extension (46) are bent in such a manner that, the support (40) being in mounted condition, they each engage behind a correspondingly positioned surface (50) of the housing.

2. Linear actuating drive with a housing (10), comprising at least two parts (10a, b) that houses at least one worm gear with a worm shaft (18) and a worm wheel (20) that are part of a gear train, and a motor (16) that drives the worm shaft and a spindle (22) connected with the worm wheel (20) and a spindle nut (24), wherein the actuating drive has a bearing (32) for the spindle (2) and the spindle nut (24) is supported by the spindle and secured against rotation, wherein an inner thread of the worm wheel (120) is engaged with the thread of the spindle (122), and a bearing (32) for the worm wheel (20), and wherein the housing (240) is provided with a recess (228) that receives an adjusting shaft (229), **characterized in that** the housing (10) is connected, at least on one of its two sides, with a reinforcement (40) made of a stronger material that is configured as a flat support and the reinforcement is positively connected to the housing and extends in longitudinal direction of the housing and the support (240) at least partially encompasses the recess (228) of the housing that houses the adjusting shaft (129, 229), wherein the at least one side (34) of the housing (10) that is provided with the support (40) is provided with a mount (36, 36a, b) corresponding to the contour of the support (40) and the mount (36) is configured as a projecting collar, the dimensions of which perpendicularly to the housing surface (34) that houses the support preferably correspond to the thickness of the support, wherein the carrying support (40) that is associated to a first housing side (34) comprises at least one angled extension (46) and the configuration of the reinforcement thus formed with a profiled shape is adapted to the shape of the housing (10) in such a manner that the angled extension (46) covers a second surface region (47) of the housing (10) that is correspondingly angled to the first surface region (34) of the housing and the frontal ends (48) of the angled extension (46) are bent in such a manner that, the support (40) being in mounted condition, they each engage behind a correspondingly positioned surface (50) of the housing.

3. Actuating drive according to claim 1 or 2, **characterized in that** the reinforcement is placed externally on at least one side of the housing (10).

4. Actuating drive according to one of the preceding claims, **characterized in that** the reinforcement is placed internally on at least one side of the housing (10).

5. Actuating drive according to one of the preceding claims, **characterized in that** a support is placed externally on both sides of the housing.

6. Actuating drive according to one of the preceding claims, **characterized in that** the support (40) comprises a full-surface plate.

7. Actuating drive according to one of the preceding claims, **characterized in that** the support (40) comprises a perforated plate.

8. Actuating drive according to one of the preceding claims, **characterized in that** the support (40) comprises a grid-like structure.

9. Actuating drive according to one of the preceding claims, **characterized in that** it comprises two single drives housed in a common housing (10) and the common housing is provided with a support (40).

10. Actuating drive according to one of the claims 1 to 9, **characterized in that** the angled extension (46) has a shorter longitudinal extension than part of the support (40) that is associated to the first surface region (34) of the housing (10).

11. Actuating drive according to one of the claims 1 to 9, **characterized in that** the angled extension (46) grips over and engages behind the surface regions of both housing parts (10a, b).

12. Actuating drive according to one of the preceding claims, **characterized in that** the support (40) is fixed by means of screws (44) to the first surface region (34).

13. Actuating drive according to one of the preceding claims, **characterized in that** the housing (410) is connected by the reinforcement support(s) to the part of furniture to be displaced.

14. Actuating drive according to claim 18, **characterized in that** the at least one support (440) is provided with an extension (480) that establishes the connection with the part of furniture to be displaced.

15. Actuating drive configured as a double drive according to one of the preceding claims, **characterized in that** both single drives arranged in series are connected in a force-locking manner by means of reinforcement supports (340), if need be with an intermediate spacing element.

## Revendications

1. Actionneur linéaire avec un boîtier (10), qui présente au moins deux parties (10a, b), dans lequel est logé au moins un engrenage à vis sans fin avec un arbre de vis sans fin (18) et une roue hélicoïdale (20) qui font partie d'un train d'engrenage, et avec un moteur (16) qui entraîne l'arbre de vis sans fin et une broche (22) reliée à la roue hélicoïdale (20) et un écrou de broche (24), cependant que le Actionneur présente un palier (32) pour la broche (2) et l'écrou de broche (24) est porté par la broche et bloqué en rotation et le boîtier (240) est pourvu d'un évidement (228) qui loge un arbre de réglage (229), **caractérisé en ce que** le boîtier (10) est pourvu, sur au moins un de ses deux côtés, d'un renforcement (40) configuré comme un appui plan en un matériau plus solide et le renforcement est relié par complémentarité de forme au boîtier (10) et s'étend dans le sens longitudinal du boîtier, cependant que l'appui (240) enserre au moins partiellement l'évidement (228) du boîtier qui loge l'arbre de réglage (129, 229), cependant que l'au moins un côté (34) du boîtier (10) qui est pourvu de l'appui (40) est pourvu d'un support (36, 36a, b) qui correspond au contour de l'appui (40) et le support (36) est configuré comme un rebord en saillie dont les dimensions perpendiculairement à la surface de boîtier (34) qui loge l'appui correspondent de préférence à l'épaisseur de l'appui, cependant que l'appui (40) porteur qui est associé à un premier côté du boîtier (34) présente au moins une protubérance coudée (46) et la configuration du renforcement profilé ainsi formé est adaptée à la forme du boîtier (10) de telle manière que la protubérance coudée (46) recouvre une seconde zone de surface (47) du boîtier (10) qui est coudée de manière correspondante à la première zone de surface (34) du boîtier et les extrémités frontales (48) de la protubérance coudée (46) sont recourbées de telle manière que, l'appui (40) étant à l'état monté, elles saisissent par l'arrière respectivement une surface (50) du boîtier positionnée de manière correspondante.

2. Actionneur linéaire avec un boîtier (10), qui présente au moins deux parties (10a, b), dans lequel est logé au moins un engrenage à vis sans fin avec un arbre de vis sans fin (18) et une roue hélicoïdale (120) qui font partie d'un train d'engrenage, et avec un moteur (16) qui entraîne l'arbre de vis sans fin et une broche (22, 122) bloquée en rotation, reliée à la roue hélicoïdale (120), cependant qu'un filet intérieur de la roue hélicoïdale (120) est en prise avec le filet de la broche (122), et un palier (32) pour la roue hélicoïdale (20) et cependant que le boîtier (240) est pourvu d'un évidement (228) qui loge un arbre de réglage (229), **caractérisé en ce que** le boîtier (10) est pourvu, sur au moins un de ses deux côtés, d'un renforcement (40) configuré comme un appui plan en un matériau plus solide et le renforcement est relié par complémentarité de forme au boîtier et s'étend dans le sens longitudinal du boîtier et l'appui (240) enserre au moins partiellement l'évidement (228) du boîtier qui loge l'arbre de réglage (129, 229), cependant que l'au moins un côté (34) du boîtier (10) qui est pourvu de l'appui (40) est pourvu d'un support (36, 36a, b) qui correspond au contour de l'appui (40) et le support (36) est configuré comme un rebord en saillie dont les dimensions perpendiculairement à la surface de boîtier (34) qui loge l'appui correspondent de préférence à l'épaisseur de l'appui, cependant que l'appui (40) qui porte qui est associé à un premier côté du boîtier (34) présente au moins une protubérance coudée (46) et la configuration du renforcement profilé ainsi formé est adaptée à la forme du boîtier (10) de telle manière que la protubérance coudée (46) recouvre une seconde zone de surface (47) du boîtier (10) qui est coudée de manière correspondante à la première zone de surface (34) du boîtier et les extrémités frontales (48) de la protubérance coudée (46) sont recourbées de telle manière que, l'appui (40) étant à l'état monté, elles saisissent par l'arrière respectivement une surface (50) du boîtier positionnée de manière correspondante.

3. Actionneur selon la revendication 1 ou 2, **caractérisé en ce que** le renforcement est placé à l'extérieur sur au moins un côté du boîtier (10).

4. Actionneur selon l'une des revendications précédentes, **caractérisé en ce que** le renforcement est placé à l'intérieur sur au moins un côté du boîtier (10).

5. Actionneur selon l'une des revendications précédentes, **caractérisé en ce qu'**un appui est placé à l'extérieur sur les deux côtés du boîtier.

6. Actionneur selon l'une des revendications précédentes, **caractérisé en ce que** l'appui (40) présente une plaque sur toute la surface.

7. Actionneur selon l'une des revendications précédentes, **caractérisé en ce que** l'appui (40) présente une plaque perforée.

8. Actionneur selon l'une des revendications précédentes, **caractérisé en ce que** l'appui (40) présente une structure en treillis.

9. Actionneur selon l'une des revendications précédentes, **caractérisé en ce qu'**il présente deux entraînements individuels logés dans un boîtier commun (10) et le boîtier commun est pourvu d'un appui (40).

10. Actionneur selon l'une des revendications 1 à 9, **caractérisé en ce que** la protubérance coudée (46) présente une extension longitudinale plus courte que la partie de l'appui (40) associée à la première zone de surface (34) du boîtier (10).

11. Actionneur linéaire selon la revendication 13, **caractérisé en ce que** la protubérance coudée (46) recouvre et saisit par derrière les zones de surface des deux parties de boîtier (10a, b).

12. Actionneur selon l'une des revendications précédentes, **caractérisé en ce que** l'appui (40) est fixé à la première zone de surface (34) au moyen de vis (44).

13. Actionneur selon l'une des revendications précédentes, **caractérisé en ce que** le boîtier (410) est relié à la partie de meuble à déplacer par l'appui (les appuis) de renforcement.

14. Actionneur selon la revendication 13, **caractérisé en ce que** l'au moins un appui (440) est pourvu d'un prolongement (480) qui établit la jonction avec la partie de meuble à déplacer.

15. Actionneur configuré comme un entraînement double selon l'une des revendications précédentes, **caractérisé en ce que** les deux entraînements individuels placés en série sont reliés l'un à l'autre quant au flux de force au moyen d'appuis de renforcement (340), éventuellement en intercalant un élément d'espacement.
